Europäisches Patentamt

(19) European Patent Office

Office européen des brevets

(11) **EP 0 803 536 B1**

(12) **FASCICULE DE BREVET EUROPEEN**

(45) Date de publication et mention
de la délivrance du brevet:
**22.03.2000 Bulletin 2000/12**

(21) Numéro de dépôt: **97400908.6**

(22) Date de dépôt: **22.04.1997**

(51) Int Cl.7: **C08L 23/10**, C08L 53/00
// (C08L23/10, 23:02),
(C08L53/00, 23:02),
(C08L23/10, 23:16),
(C08L53/00, 23:16)

(54) **Plaque monocouche antiglissante pour intercalaires ou emballages**

Einlagige, rutschfeste Platte für Zwischenlagen oder Verpackungen

Non-sliding, one-layer sheet for interlayers and packaging

(84) Etats contractants désignés:
**BE DE ES GB IT NL**

(30) Priorité: **23.04.1996 FR 9605113**

(43) Date de publication de la demande:
**29.10.1997 Bulletin 1997/44**

(73) Titulaire: **Kaysersberg Packaging**
**68320 Kunheim (FR)**

(72) Inventeurs:
• **Coste, Jean-Philippe**
**68240 Kaysersberg (FR)**

• **Porret, Laurent**
**68000 Colmar (FR)**

(74) Mandataire: **David, Daniel**
**James River,**
**Service Propriété Industrielle,**
**23 boulevard Georges Clemenceau**
**92402 Courbevoie Cédex (FR)**

(56) Documents cités:
**FR-A- 2 683 790         FR-A- 2 690 141**
**JP-A- 49 048 465**

## Description

L'invention concerne des plaques antiglissantes à base de polyoléfine.

Ces plaques sont notamment utilisées comme intercalaires de palettisation ou pour des emballages destinés au transport ou au stockage de contenants. Elles servent par exemple à supporter des récipients en séparant plusieurs couches de bouteilles.

Il existe déjà des plaques antiglissantes à base de polyoléfine pour intercalaires ou emballages. Mais ces plaques comportent toutes au moins deux couches, une couche de coeur et une couche de revêtement qui, elle seule, est antiglissante.

Le brevet français n° 2 683 790 décrit des plaques ayant une couche de coeur en polyoléfine et une couche externe coextrudée en une matière thermoplastique compatible avec les polyoléfines, ayant des propriétés antiglissantes. L'épaisseur de la couche externe se situe dans l'intervalle de 5 à 150 μm. La fabrication d'une telle plaque, faisant appel à la coextrusion, reste difficile et coûteuse. Elle entraîne parfois des dépôts formant des traînées visibles en surface de la couche externe.

Le brevet français n° 2 690 141 révèle quant à lui des plaques antiglissantes constituées d'une couche de coeur à base de polyoléfine et d'une couche de revêtement alvéolaire qui a été fabriquée au préalable. Cette couche de revêtement est solidarisée sur la couche de coeur par soudure par ultrasons, collage ou couture. La couche de revêtement alvéolaire est souple, de faible grammage et présente une faible résistance à l'écrasement. C'est la couche de coeur qui apporte la rigidité à l'ensemble formant la plaque.

Ici encore, la fabrication d'une telle plaque reste complexe et coûteuse.

La présente invention a pour but de pallier l'ensemble des inconvénients rencontrés avec les plaques antiglissantes connues jusqu'alors.

L'invention a pour but de fournir une plaque antiglissante de fabrication simple et peu coûteuse.

L'invention a également pour but de fournir une plaque antiglissante ayant au moins d'aussi bonnes propriétés mécaniques que les plaques antiglissantes de l'art antérieur.

L'invention a encore pour but de fournir une plaque antiglissante ayant le même aspect esthétique que les plaques antiglissantes de l'art antérieur et ne présentant pas de traînées visibles en surface de la plaque.

La solution selon l'invention, est une plaque monocouche antiglissante fabriquée par extrusion, dont la composition est à base d'un mélange de polyoléfines spécifiques et d'un composant thermoplastique compatible avec les polyoléfines et possédant des propriétés antiglissantes, et dont les caractéristiques dimensionnelles sont elles aussi spécifiques.

Selon une caractéristique essentielle de l'invention, la composition de la plaque comprend :

- entre environ 20 et environ 50 % en poids d'un composant thermoplastique compatible avec les polyoléfines et possédant des propriétés antiglissantes, et
- entre environ 50 et environ 80 % en poids d'un mélange d'un composant polypropylène homopolymère et d'un composant polypropylène copolymère hétérophasique,

l'épaisseur de la plaque variant dans un intervalle allant d'environ 0,3 millimètre à environ 10 millimètres et le grammage de la plaque, dans un intervalle d'environ 200 à environ 2000 $g/m^2$.

Selon une caractéristique avantageuse de l'invention, la composition de la plaque comprend :

- entre environ 20 et environ 50 % en poids d'un composant thermoplastique compatible avec les polyoléfines et possédant des propriétés antiglissantes,
- entre environ 20 et environ 40 % en poids d'un composant polypropylène homopolymère, et
- entre environ 20 et environ 40 % en poids d'un composant de polypropylène copolymère hétérophasique.

Selon une caractéristique très avantageuse de l'invention, la composition de la plaque comprend 40 % en poids dudit composant thermoplastique compatible avec les polyoléfines et possédant des propriétés antiglissantes.

Selon encore une caractéristique essentielle de l'invention, la plaque est alvéolaire et a une épaisseur dans un intervalle allant d'environ 2 à environ 10 millimètres et un grammage dans un intervalle allant d'environ 200 à environ 2000 $g/m^2$.

D'autres caractéristiques et avantages de l'invention apparaîtront à la lecture détaillée de l'invention qui suit.

L'invention a pour objet des plaques monocouches pleines ou alvéolaires fabriquées par extrusion. Elles sont réalisées à base d'un mélange de polyoléfines particulières et d'un composant thermoplastique compatible avec les polyoléfines et ayant des propriétés antiglissantes. Ce dernier composant est réparti dans la masse.

Jusqu'alors, les plaques étaient constituées de deux couches, l'une apportant la rigidité (la couche de coeur), l'autre, le caractère antiglissant (la couche de revêtement). Le choix d'une plaque monocouche antiglissante n'était pas évident et apporte pourtant une grande simplification sur le plan de la fabrication. La plaque selon l'invention présente de plus des propriétés avantageuses qui n'étaient pas attendues. Deux catégories de paramètres sont importantes pour l'invention.

La première catégorie est relative à la composition chimique de la plaque : d'une part, la nature chimique du mélange de polyoléfines et sa répartition en poids, et, d'autre part, le pourcentage en poids du composant ayant des propriétés antiglissantes.

Le mélange de polyoléfines particulières, décrit ci-après, permet à la plaque de conserver des propriétés mécaniques telles que la rigidité, la résistance à l'écrasement, requises pour ses utilisations comme intercalaires ou emballages. En effet, le composant thermoplastique ayant des propriétés antiglissantes a une influence négative sur les propriétés mécaniques de la plaque en l'occurrence la résistance à l'écrasement.

La seconde catégorie repose sur les caractéristiques dimensionnelles de la plaque, telles que l'épaisseur et le grammage.

La composition de la plaque comprend entre environ 20 et environ 50 % en poids d'un composant thermoplastique compatible avec les polyoléfines et ayant des propriétés antiglissantes, entre environ 50 et environ 80 pour cent en poids d'un mélange d'un composant polypropylène homopolymère et d'un composant polypropylène copolymère hétérophasique. De préférence la composition de la plaque comprend entre environ 20 et 40 % en poids du composant polypropylène homopolymère et entre environ 20 et environ 40 % en poids du composant polypropylène copolymère hétérophasique en ce qui concerne le mélange spécifique de polyoléfines. Plus préférentiellement, la composition de la plaque comprend environ 40 % en poids du composant ayant des propriétés antiglissantes.

Le composant ayant des propriétés antiglissantes peut être un caoutchouc thermoplastique, tel que le Santoprène 201-55 commercialisé par ADVANCED d'ELASTOMER SYSTEMS.

Dans un mode de réalisation préféré de l'invention, ce composant thermoplastique est une polyoléfine. On peut citer par exemple la polyoléfine commercialisée sous le nom ADFLEX Q 100 F par la société MONTELL ou encore des polyoléfines commercialisées sous le nom HIFAX FX 7036 XCP ou HIFAX FX 7042 XCP par la société HIMONT.

Le polypropylène homopolymère est par exemple le produit commercialisé sous le nom GRN ou PHN 75 par la société BOLLORE.

Le polypropylène copolymère hétérophasique est par exemple le produit commercialisé sous le nom EPS 31 HP par la société MONTELL.

Dans la description qui suit, on réalise de manière classique, à partir des compositions mentionnées ci-dessus, des plaques alvéolaires. Celles-ci ont une épaisseur pouvant varier dans l'intervalle allant d'environ 2 à environ 10 millimètres et un grammage pouvant varier dans l'intervalle allant d'environ 200 à environ 2000 g/m$^2$.

Les propriétés mécaniques des plaques fabriquées dans les exemples qui suivent, sont mesurées par différents tests, le premier qui est un test de flexion trois points, donnant des valeurs de rigidité et de rupture et le second, qui est un test mesurant l'angle de glissement.

**Mesure de la rigidité**

Cette mesure s'effectue suivant la norme internationale ISO 178-1975 (F) "Matières plastiques - Détermination des caractéristiques en flexion des matières plastiques rigides".

Plus précisément, cette mesure est réalisée suivant un test de rigidité en flexion trois points qui consiste à mesurer la pente de la courbe de déformation d'une plaque rectangulaire reposant sur deux appuis.

On déforme la plaque par l'intermédiaire d'une panne appliquée à égale distance des appuis et se déplaçant à vitesse constante.

Le diamètre des appuis est de 10 millimètres. Les deux appuis sont distants de 10 centimètres et la panne est distante de 5 centimètres de la projection de chacun des appuis sur la face supérieure de la plaque.

On utilise une machine de traction modèle INSTRON 4301 munie d'un capteur de force 100 kgf (980,7 Newtons).

Le protocole de mesure est le suivant :

Deux mesures sont effectuées : l'une dans le sens marche (SM) et l'autre dans le sens travers (ST) sur des éprouvettes de dimensions déterminées.

On prélève dans chaque plaque à tester 5 échantillons 4 x 20 cm$^2$ pour la mesure SM et 5 échantillons 4 x 20 cm$^2$ pour la mesure ST. On effectue la mesure comme suit.

Dans un premier temps, on monte la traverse à une vitesse constante de 5 mm/min, on détermine les conditions optimales pour le calcul de la pente (vitesse du papier et choix de l'échelle des forces de l'enregistreur), on note les conditions choisies pour chaque échantillon, puis on mesure la pente (en kgf/mm) qui est tracée pour chaque courbe.

La pente est calculée comme suit :

$$\text{Pente } P = \frac{F \times Vp}{X \times Vt} \text{ en kgf/mm}$$

F (en kfg) et X (en mm) sont mesurées sur la courbe.
Vp est la vitesse du papier (en mm/min) et
Vt est la vitesse de la traverse (en mm/min)

Les résultats sont calculés comme valeur moyenne des 5 mesures SM et ST des échantillons testés, et rapportés en Newton par millimètre (N/mm).
On effectue ces mesures à 20°C.

**Mesure de la rupture**

Le principe est le même que pour la mesure de la rigidité mais la vitesse de montée de la traverse est de 300 mm/min.

**Mesure de l'angle de glissement**

On pose un échantillon de contenant sur une éprouvette de la plaque à tester, reposant sur un plan horizontal. On incline l'ensemble lentement. On mesure l'angle maximum avant glissement dudit échantillon de contenant.
L'échantillon de contenant est posé à l'extrémité la plus éloignée de l'axe de rotation.
Le plan est incliné à la vitesse de $\alpha°$/s. Un relais, positionné à proximité de l'axe de rotation, arrête le chronomètre quand l'échantillon de contenant glisse.
La mesure du temps nécessaire au glissement de l'échantillon de contenant donne son angle de glissement sur la plaque testée.

Protocole de mesure de l'angle de glissement pour une bouteille en verre de 100 cl vidée.

Le fond de la bouteille est préalablement lestée (par des pièces métalliques) pour atteindre un poids de 559 g afin d'abaisser son centre de gravité.

- Découpe d'échantillons de 12 cm x 12 cm sur la largeur de la plaque.
- Placer l'échantillon à analyser sur le plan inclinable.
- Poser à l'extrémité de l'éprouvette la bouteille (extrémité la plus éloignée de l'axe de rotation de la table où se trouve le relais).
- Faire une mesure pour le recto, le verso (parallèlement ou perpendiculairement aux éventuelles cannelures).
- Mesurer l'angle maximum avant que la bouteille glisse. Pour cela, on mesure le temps nécessaire au glissement de la bouteille sachant que la vitesse d'inclinaison est de 1°/seconde.
- Vérifier l'horizontalité du plan inclinable (avec un niveau à bulles) avant chaque mesure.
- Calculer l'angle moyen pour chacune des faces (recto-verso) et orientation (parallèle ou perpendiculaire aux éventuelles cannelures).
- Le résultat d'angle est exprimé en degrés.

Une autre mesure de l'angle de glissement est réalisée suivant la norme T815 om-85 qui est exclusivement appliquée aux produits en carton.
Le dispositif de mesure est également un plan inclinable. Il est incliné au moyen d'un levier qui est levé ou baissé. Plus précisément, ce dispositif comprend un plateau ou traîneau rectangulaire en métal avec une surface plane, et un plan inclinable de surface plane, à charnières, pouvant ainsi être incliné. Ce dernier est muni d'un revêtement incompressible pouvant être en métal, bois dur, plastique ou verre plat. Ce plan comporte des moyens de fixation à son extrémité supérieure pour fixer l'échantillon à tester et un butoir d'arrêt à son extrémité inférieure.
Chaque échantillon comprend deux plaques, l'une plus petite destinée à être placée dans le traîneau et l'autre plus large (que le traîneau) et suffisamment longue pour que le traîneau puisse se déplacer de 15 millimètres.
La mesure de l'angle se fait au moyen d'un rapporteur prévu sur le côté du plan inclinable.
Le plan au départ est horizontal. La plaque la plus large est montée sur le plan avec la surface à tester tournée vers le haut. L'autre plaque est fixée ou placée sur le traîneau avec la surface à tester tournée vers le bas, le traîneau étant lui-même placé sur la plaque la plus large.
Le plan est incliné à une certaine vitesse. Lorsque le traîneau commence à bouger, on arrête immédiatement l'inclinaison du plan et on laisse glisser le traîneau vers le butoir. On remonte le traîneau et l'on replace l'ensemble dans sa position horizontale initiale. On répète ceci deux fois supplémentaires et on mesure l'angle de glissement au moment où le traîneau commence à bouger à la troisième opération d'inclinaison du plan.

**Témoin**

On fabrique une plaque alvéolaire standard monocouche par extrusion, ayant une épaisseur de 2 millimètres, un grammage de 320 g/m$^2$ et dont la composition en poids est la suivante :

| | |
|---|---|
| EPS 31 HP (polypropylène copolymère hétérophasique) | 43,2 % |
| PHN 75 (polypropylène homopolymère) | 50 % |
| MB 475 U*(polypropylène copolymère chargé en talc) | 5 % |
| Colorant blanc | 1,8 % |

\* commercialisé par la société BOREALIS

Cette plaque présente des propriétés de rigidité satisfaisantes.

**Exemple 1**

On fabrique par extrusion une plaque alvéolaire monocouche, ayant une épaisseur de 2 millimètre, un grammage de 320 g/m$^2$ (de mêmes dimensions que le témoin) et dont la composition comprend 20 % de polyoléfine ayant des propriétés antiglissantes, commercialisée sous le nom ADFLEX par la société MONTELL.

**Exemple 2**

Une plaque alvéolaire monocouche présentant les mêmes caractéristiques dimensionnelles que le témoin et la plaque de l'exemple 1, est fabriquée. Seule sa composition varie : elle comprend 40 % en poids de la polyoléfine ayant des propriétés antiglissantes commercialisée sous le nom ADFLEX par la société MONTELL.

**Exemple 3**

On fabrique une plaque alvéolaire ayant la même composition que celle de la plaque de l'exemple 2 mais des caractéristiques dimensionnelles différentes : une épaisseur de 2,5 millimètres et un grammage de 400 g/m$^2$.
On mesure sur ces différentes plaques, les propriétés de rigidité, rupture et l'angle de glissement selon les tests décrits précédemment. Une seconde mesure de l'angle de glissement a été faite suivant la norme T 815.
Les résultats sont rapportés dans le tableau qui suit :

| | Témoin | Ex. 1 | Ex. 2 | Ex. 3 |
|---|---|---|---|---|
| Rigidité (N/mm) | 0,59 | 0,39 | 0,29 | 0,88 |
| Rupture (N) | 6,86 | 6,86 | 3,92 | 10,79 |
| Glissement mesuré (°) | 17° | 21,5° | 26,5° | 22° |
| Glissement norme T 815 (°) | 18° | 22° | 25° | 21° |

Les meilleurs résultats sont obtenus pour l'exemple 3, c'est-à-dire pour une plaque dont la composition comprend 40 % d'une polyoléfine ayant des propriétés antiglissantes et qui a une épaisseur de 2,5 millimètres et un grammage de 400 g/m$^2$. A épaisseur et grammage égale d'une plaque plus on augmente la concentration en polyoléfine ayant des propriétés antiglissantes, plus les propriétés mécaniques (rigidité et rupture) diminuent. Un équilibre entre les dimensions (épaisseur et grammage) et la composition chimique de la plaque, notamment la concentration en composant ayant des propriétés antiglissantes, est à trouver pour arriver à obtenir de bonnes propriétés mécaniques tout en présentant les propriétés requises, ce que l'invention propose.

**Revendications**

1. Plaque monocouche antiglissante pour intercalaires ou emballages, caractérisée en ce que la composition de la plaque comprend :

   - entre environ 20 et environ 50 % en poids d'un composant thermoplastique compatible avec les polyoléfines et possédant des propriétés antiglissantes, et
   - entre environ 50 et environ 80 % en poids d'un mélange d'un composant polypropylène homopolymère et d'un composant polypropylène copolymère hétérophasique,

   et en ce que l'épaisseur de ladite plaque varie dans un intervalle allant d'environ 0,3 à environ 10 millimètres et le grammage dans un intervalle allant d'environ 200 à environ 2000 g/m$^2$.

2. Plaque selon la revendication 1, caractérisée en ce que ladite composition comprend :

   - entre environ 20 et environ 50 % en poids d'un composant thermoplastique compatible avec les polyoléfines et possédant des propriétés antiglissantes,
   - entre environ 20 et environ 40 % en poids de composant polypropylène homopolymère, et
   - entre environ 20 et environ 40 % en poids de composant polypropylène hétérophasique.

3. Plaque selon l'une des revendications précédentes, caractérisée en ce que ladite composition comprend de préférence 40 % en poids dudit composant thermoplastique et possédant des propriétés antiglissantes.

4. Plaque selon l'une des revendications précédentes, caractérisée en ce que ledit composant thermoplastique ayant des propriétés antiglissantes est une polyoléfine.

5. Plaque selon l'une des revendications précédentes, caractérisée en ce qu'elle est alvéolaire, a une épaisseur variant dans un intervalle allant d'environ 2 à environ 10 millimètres et un grammage dans un intervalle allant d'environ 200 à environ 2000 g/m$^2$.

6. Plaque selon la revendication 3, caractérisée en ce qu'elle a une épaisseur d'environ 2,5 millimètres et un grammage d'environ 400 g/m$^2$.


**Patentansprüche**

1. Einlagige, rutschfeste Platte für Zwischenlagen oder Verpackungen, dadurch gekennzeichnet, daß die Platte eine Zusammensetzung wie folgt hat:

   - zwischen ungefähr 20 und ungefähr 50 Gew.-% einer thermoplastischen Komponente, die mit den Polyolefinen kompatibel ist und rutschfeste Eigenschaften besitzt und
   - zwischen ungefähr 50 und ungefähr 80 Gew.-% eines Gemisches aus einer Polypropylen-Homopolymer-Komponente und einer heterophasischen Polypropylen-Copolymer-Komponente, und

   daß die Dicke der Platte in einem Bereich von ungefähr 0,3 bis ungefähr 10 mm variiert und das Flächengewicht in einem Bereich von ungefähr 200 bis 2000 g/m$^2$.

2. Platte nach Anspruch 1, dadurch gekennzeichnet, daß die Zusammensetzung aufweist:

   - zwischen ungefähr 20 und ungefähr 50 Gew.-% einer thermoplastischen Komponente, die mit den Polyolefinen kompatibel ist und rutschfeste Eigenschaften besitzt,
   - zwischen ungefähr 20 und ungefähr 40 Gew.-% einer Polypropylen-Homopolymer-Komponente und
   - zwischen ungefähr 20 und ungefähr 40 Gew.-% einer heterophasischen Polypropylen-Komponente.

3. Platte nach einem der vorhergehenden Ansprüche, dadurch gekennzeichnet, daß die Zusammensetzung vorzugsweise 40 Gew.-% der thermoplastischen und rutschfeste Eigenschaften besitzenden Komponente aufweist.

4. Platte nach einem der vorhergehenden Ansprüche, dadurch gekennzeichnet, daß die thermoplastische Komponente, die rutschfeste Eigenschaften hat, ein Polyolefin ist.

**5.** Platte nach einem der vorhergehenden Ansprüche, dadurch gekennzeichnet, daß sie wabenförmig ist, eine Dicke hat, die in einem Bereich von ungefähr 2 bis ungefähr 10 mm variiert, und ein Flächengewicht in einem Bereich von ungefähr 200 bis ungefähr 2000 g/m$^2$ hat.

**6.** Platte nach Anspruch 3, dadurch gekennzeichnet, daß sie eine Dicke von ungefähr 2,5 mm und ein Flächengewicht von ungefähr 400 g/m$^2$ hat.

**Claims**

**1.** Non-sliding one-layer sheet for dividers or packaging, characterized in that the composition of the sheet comprises:

- between approx. 20 and approx. 50 wt.% of a thermoplastic component compatible with the polyolefins and having non-sliding properties, and
- between approx. 50 and approx. 80 wt.% of a mixture of a polypropylene homopolymer component and of a heterophase polypropylene copolymer component,

and in that the thickness of the said sheet varies in a range from approx. 0.3 to approx. 10 millimetres and the mass per unit area in a range from approx. 200 to approx. 2000 g/m$^2$.

**2.** Sheet according to Claim 1, characterized in that the said composition comprises:

- between approx. 20 and approx. 50 wt.% of a thermoplastic component compatible with the polyolefins and having non-sliding properties,
- between approx. 20 and approx. 40 wt.% of polypropylene homopolymer component, and
- between approx. 20 and approx. 40 wt.% of heterophase polypropylene component.

**3.** Sheet according to one of the preceding Claims, characterized in that the said composition preferably comprises 40 wt.% of the said thermoplastic component and having non-sliding properties.

**4.** Sheet according to one of the preceding Claims, characterized in that the said thermoplastic component having non-sliding properties is a polyolefin.

**5.** Sheet according to one of the preceding Claims, characterized in that it is honeycomb, has a thickness varying in a range from approx. 2 to approx. 10 millimetres and a mass per unit area in a range from approx. 200 to approx. 2000 g/m$^2$.

**6.** Sheet according to Claim 3, characterized in that it has a thickness of approx. 2.5 millimetres and a mass per unit area of approx. 400 g/m$^2$.